# EUROPÄISCHE PATENTSCHRIFT

(11) **EP 0 889 082 B1**
(45) Veröffentlichungstag und Bekanntmachung des Hinweises auf die Patenterteilung: **08.12.1999**
(21) Anmeldenummer: 98110611.5
(22) Anmeldetag: 10.06.1998
(51) Int. Cl.: C08K 3/04

(54) **Verfahren zur Herstellung von Polyurethan-Hartschaumstoffen mit geringer Wärmeleitfähigkeit**
Preparation process for rigid polyurethane foam of low thermal conductivity
Procédé de preparation de mousse de polyurethane rigide ayant une faible conductivité thermique

(30) Priorität: 04.07.1997 DE 19728543
(43) Veröffentlichungstag der Anmeldung: 07.01.1999
(73) Patentinhaber: BASF AKTIENGESELLSCHAFT, 67056 Ludwigshafen (DE)
(72) Erfinder: Glück, Guiscard, Dr., 55129 Mainz (DE); Hahn, Klaus, Dr., 67281 Kirchheim (DE); Rotermund, Udo, Dr., 01990 Ortrand (DE); Volkert, Otto, Dr., 67273 Weisenheim (DE)

(56) Entgegenhaltungen:
- EP-A- 0 337 228
- EP-A- 0 464 204
- WO-A-90/11318

## Beschreibung

Gegenstand der Erfindung ist ein Verfahren zur Herstellung von Polyurethan- im folgenden abgekürzt PU genannt- Hartschaumstoffen aus an sich bekannten Aufbaustoffen in Gegenwart von Graphit und die Verwendung dieser PU-Hartschaumstoffe zum Ausschäumen von Hohlräumen in Kühlmöbeln oder Heizungselementen sowie als Dämmstoff für Verbundelemente.

Die Herstellung von Verbund- oder Sandwichelementen, die aufgebaut sind aus einem PU-Hartschaumstoff und mindestens einer Deckschicht aus einem starren oder elastischen Material, wie z.B. Papier, Kunststoffolien, Metallblechen, Glasvliesen, Spanplatten u.a., ist bekannt. Bekannt ist ferner die Ausschäumung von Hohlräumen in Haushaltsgeräten, wie Kühlmöbeln, beispielsweise Kühlschränken oder -truhen oder von Heißwasserspeichern, mit PU-Hartschaumstoff als Wärmedämmstoff. Um Schaumfehlstellen zu vermeiden, muß hierzu das schaumfähige PU-Reaktionsgemisch innerhalb einer kurzen Zeit in den zu isolierenden Hohlraum eingefüllt werden. Zum Ausschäumen derartiger Gegenstände werden üblicherweise Niederdruck- oder vorzugsweise Hochdruckmaschinen eingesetzt.

Hierfür geeignete wärme- und kältedämmende PU-Hartschaumstoffe können bekanntermaßen durch Umsetzung von organischen Polyisocyanaten mit einer oder mehreren Verbindungen mit mindestens zwei reaktiven Wasserstoffatomen, vorzugsweise Polyester- und/oder Polyetherpolyolen, sowie üblicherweise unter Mitverwendung von Kettenverlängerungsmitteln und/oder Vernetzungsmitteln in Gegenwart von Treibmitteln, Katalysatoren und gegebenenfalls Hilfsmitteln und/oder Zusatzstoffen hergestellt werden. Bei geeigneter Wahl der Aufbaukomponenten können hierbei PU-Hartschaumstoffe mit einer niedrigen Wärmeleitzahl und guten mechanischen Eigenschaften erhalten werden.

Eine zusammenfassende Übersicht über die Herstellung von PU-Hartschaumstoffen und ihre Verwendung als Deck- oder vorzugsweise Kernschicht in Verbundelementen sowie ihre Anwendung als Dämmschicht in der Kühl- oder Heizungstechnik wurde z.B. publiziert in Polyurethane, Kunststoff-Handbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag, München, Wien.

Als Treibmittel wurden früher Fluor-Chlor-Kohlenwasserstoffe (FCKW) verwendet, die -aufgrund der bekannten Ozonproblematikspäter durch Hydrofluor-Chlor-Kohlenwasserstoffe (HFCKW) ersetzt wurden. Da auch HFCKW ein gewisses Ozonabbaupotential haben, geht man mehr und mehr zu halogenfreien Treibmitteln über. Typische Vertreter dieser Substanzgruppe sind n-Pentan und Cyclopentan. Aus schäumtechnischen Gründen wird dabei nicht allein mit Pentan geschäumt, sondern es wird CO2 als Cotreibmittel eingesetzt, das in situ durch die Reaktion von NCO-Gruppen mit Wasser gebildet wird. Der Nachteil der Pentane ist ihr etwas schlechteres Isolationsvermögen verglichen mit FCKWs. Eine Verringerung der Wärmeleitfähigkeit derartiger Schäume ist daher ein wichtiges Problem.

Die Wärmeleitfähigkeit eines Schaums setzt sich aus 3 Teilbeträgen zusammen: Wärmeleitfähigkeit der Gasphase, Wärmeleitfähigkeit der Matrix und Wärmeleitfähigkeit durch Strahlung. Da Treibmittel und Matrix vorgegeben sind, ist die Reduktion des Strahlungsanteils der Wärmeleitfähigkeit die praktisch wichtigste Möglichkeit.

Es ist bekannt, den Strahlungsanteil der Wärmeleitfähigkeit von Schäumen durch Zugabe von Ruß zu reduzieren (JP 5 7147-510, DE 3 629 390, US 4 795 763, US 5 137 930, US 5 149 722, US 5 192 607, JP 6 228 267, JP 7 082 402, US 5 397 808, US 5 565 497, EO-A-338 131, WO 94/13721, WO 95/10558). Ruß in PU-Schaum hat jedoch 2 große Nachteile: a) die Handhabung, insbesondere die Dispergierung des sehr feinteiligen Materials in den Ausgangskomponenten ist schwierig und erfordert aufwendige Vorsichtsmaßnahmen und b) die relativ harten Rußteilchen wirken auf Dauer abrasiv auf die sorgfältig eingeschliffenen Kolben der Mischköpfe von PU-Dosiermaschinen.

Die Aufgabe der Erfindung war die Verringerung der Wärmeleitfähigkeit von PU-Hartschaumstoffen, wobei die aus der Verwendung von Ruß resultierende Nachteilen überwunden werden sollten.

Es wurde nun gefunden, daß überraschenderweise eine bessere Reduzierung der Wärmeleitfähigkeit von PU-Schäumen erreicht wird, wenn man nicht mit Ruß, sondern mit Graphit als Zusatzmittel arbeitet. Durch seine physikalische Beschaffenheit hat Graphit außerdem nicht die geschilderten negativen Verarbeitungseigenschaften von Ruß.

Gegenstand der Erfindung ist somit ein Verfahren zur Herstellung von PU-Hartschaumstoffen mit geringer Wärmeleitfähigkeit durch Umsetzung von
a) organischen und/oder modifizierten organischen Polyisocyanaten mit
b) mindesten einer Verbindung mit mindestens 2 reaktiven Wasserstoffatomen und gegebenenfalls
c) Treibmitteln
d) Katalysatoren und gegebenenfalls
e) Hilfsmitteln und/oder Zusatzstoffen,
das dadurch gekennzeichnet ist, daß die Schäume zusätzlich Graphit enthalten.

Bei dem verwendeten Graphit ist Blähgraphit, auch als expandierbarer Graphit bezeichnet, ausgenommen.

Der Gehalt an Graphit in PU-Schaum beträgt vorzugsweise 1 - 20 Gew.-%, insbesondere 1 - 10 Gew.-%, bezogen auf das Gewicht des Schaums. Geringere Gehalte bewirken keine ausreichende Senkung der Wärmeleitfähigkeit, höhere Gehalte können zu Schädigungen des Schaumgerüstes führen.

Besonders vorteilhaft ist es, wenn mindestens 50 % des Graphits eine Korngröße unter 20 µm aufweist.

Zur Herstellung der PUR-Hartschaumstoffe nach dem erfindungsgemäßen Verfahren finden an sich bekannte Aufbaukomponenten Verwendung, zu denen im einzelnen folgendes auszuführen ist.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocanat, 2-Ethyl-tetramethylen-diisocyanat-1,4,2-Mehyl-pentamethylen-diisocyanat-1,5 Tetramethylendiisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylendiisocyanat sowie die entsprechenden Isomerengemische, 4,4'-, 2,2'-Dicyclohexylmethan-diisocyanat sowie die entsprechenden Isomerengmische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan, diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4' und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen DI- und Polyisocyanate können einzeln oder in Form von Mischungen eingesetzt werden.
   Häufig werden auch sogenannte modifizierte mehrwertige Isocyanate, d. h. Produkte, die durch partielle chemische Umsetzung organischer Di- und/oder Polyisocyanate erhalten werden, verwendet. Beispielhaft genannt seien Ester-, Harnstoff-, Biret-, Allophanat-, Carbodiimid-, Isocyanurat- und/oder Urethangruppen enthaltende Di- und 7 oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Melokulargewichten bis 1500 modifiziertes 4,4'-Diphenylmethan-diisocyanat oder 2,4- bzw. 2,6-Toluylendiisocyanat, wobei als Di- bzw. Polyoxyalkylen-glykole, die einzeln oder als Gemische eingesetzt werden können; beispielsweise genannt seien:Diethylen-, Dipropylen-glykol, Polyoxyethylen-, Polyoxypropylen- und Polyoxypropylen-polyoxyethylen-glykole oder -triole. Geeignet sind auch NCO-Gruppen enthaltende Prepolymere mit NCO-Gehalten von 25 bis 9 Gew.-%, vorzugsweise von 21 bis 14 Gew.-%, bezogen auf das Gesamtgewicht, hergestellt aus den nachfolgend beschriebenen Polyester- und/oder vorzugsweise Polyether-polyolen und 4,4'-Diphenylmethan-diisocyanat, 2,4- und/oder 2,6-Toluylen, diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2 -Diphenylmethandiisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,2'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen daher vorzugsweise zur Anwendung zur Herstellung der PU-Hartschaumstoffe: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solchen auf Basis von Toluylen-diisocyanaten, 4,4'-Diphenylmehtan-diisocyanat, Diphenylmethan- diisocyanat-Isomerengemischen oder Roh-MDI und insbesondere Roh-MDI mit einem Diphenylmethandiisocyanat-Isomerengehalt von 30 bis 80 Gew.-%, vorzugsweise von 30 bis 55 Gew.-%.
b) Als Verbindungen mit mindestens zwei reaktiven Wasserstoffatomen (b) kommen vorzugsweise Polyhydroxylverbindung mit einer Funktionalität von 2 bis 8, vorzugsweise von 3 bis 8 und einer Hydroxylzahl von 150 bis 850, vorzugsweise von 350 bis 800, sowie gegebenenfalls Kettenverlängerungs- und/oder Vernetzungsmittel in Betracht.
   Beispielhaft für Polyhydroxylverbindungen genannt seien polythioether-polyole, Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyhydroxylverbindungen, sofern diese eine durchschnittliche Hydroxylzahl im vorgenannten Bereich aufweisen.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3 und eine Hydroxylzahl von 150 bis 400 und insbesondere von 200 bis 300.
   Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und mindestens einem Startermolekül, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terphthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls monound dialkylsubstituiertes Ethylendiamin, Diethylentriamin, Triethylentetramin, 1,3-Propylendiamin, 1,2- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak.
   Vorzugsweise verwendet werden mehrwertige, insbesondere dreiund/oder hoherwertige Alkohole, wie Ethandiol, Propandiol-1,2 und -1,3,Diethylenglykol, Diprpylenglykol, Butandiol-1,4, Hexandiol-1,6, Glycerin, Trimethylolpropan, Pentaerythrit, Sorbit und Sucrose.
   Die Polyether-polyole besitzen eine Funktionalität von vorzugsweise 3 bis 8 und insbesondere 3 und 6 und Hydroxylzahlen von vorzugsweise 300 bis 850 und insbesondere von 350 bis 800.
   Als Polyether-polyole eignen sich ferner Melamin-Polyetherpolyol-Dispersionen gemäß EP-A-23 987 (US-A-4 293 657), Polymer-Polyether-polyol-Dispersionen, hergestellt aus Polyepoxiden und Epoxidharzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), polyharnstoff-Polyether-polyol-Dispersionen gemäß DE-A-31 25 402, Tris-(hydoxyalkyl)isocyanurat-Polyether-polyol-Dispersionen gemäß Ep-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.
   Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden, Polyacetalen und/oder Polycarbonaten gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen gesättigten und/oder ungesättigten Carbonsäuren bzw. deren Anhydriden und Aminoalkoholen oder Mischungen aus mehrwertigen Alkoholen und Aminoalkoholen und/oder Polyaminen gewonnenen, vorwiegend linearen Kondensate.
   Die PU-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden, vorzugsweise Alkanolamine und insbesondere Diole und/oder Triole mit Molekulargewichten kleiner als 400, vorzugsweise von 60 bis 300. In Betracht kommen beispielsweise Alkanolamine, wie z.B. Ethanolamin und/oder Isopropanolamin, Dialkanolamine wie z.B. Diethanolamin, N-Methyl-, N-Ethyldiethanolamin, Diisopropanolamin, Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N'-Tetra(2-hydroxyethyl) ethylendiamin und N,N'-Tetra(2-hydroxypropyl) ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen und/oder 1,2-Propylenoxid und aromatischen Diaminen, wie z.B. Toluylen-diaminen und/ oder Diamino-diphenylmethanen sowie den vorgenannten Alkanolaminen, Diolen und/oder Triolen als Startermoleküle.
   Sofern zur Herstellung der PU-Hartschaumstoffe Kettenverlängerungsmittel, Vernetzungsmittel oder Mischungen davon Anwendung finden, kommen diese zweckmäßigerweise in einer Menge von 0 bis 20 Gew.-% vorzugsweise von 2 bis 5 Gew.-%, bezogen auf das Gewicht der Verbindungen mit mindestens zwei reaktiven Wasserstoffatomen zum Einsatz.
c) Als Treibmittel kommen die übliche physikalischen Treibmittel wie Alkane, Alkene, Cycloalkane, Ester, Ether, Ketone, Acetale, Fluoralkane, Hydrofluor-chlor-alkane usw. zum Einsatz. Beispielhaft genannt seien im einzelnen: Butan, n-Pentan, iso-Pentan, Cyclopentan, Cyclohexan, Methylformiat, Ethylformiat, Methylacetat, Ethylacetat, Methylethylether, Diethylether, Azeton, Formaldehyddimethylacetal, Tetrafluorethan, Difluorchlormethan oder 1,1,1-di-Chlor-Fluorethan. Dabei können die physikalischen Treibmittel natürlich auch als Mischungen verwendet werden. Vorteilhaft und bevorzugt ist die Verwendung einer Kombination von physikalischem Treibmittel und Wasser, d.h. CO₂, das bei der Reaktion von Wasser mit Isocyanat gebildet wird.
d) Als Katalysatoren (e) werden insbesondere Verbindungen verwendet, die die Reaktion der Hydroxylgruppen enthaltenden Verbindungen der Komponente (b) mit den Polyisocyanaten stark beschleunigen. In Betracht kommen organische Metallverbindungen, vorzugsweise organische Zinnverbindungen, wie Zinn-(II)-Salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilarat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin oder -hexandiamin, Pentamethyl-diethylentriamin, Tetramethyl-diaminoethylether, Bis-(dimethylaminopropyl) -harnstoff, Dimethylpiperazin, 1,2-Dimethylimidazol, 1-Aza-bicyclo-(3,3,0)-octan und vorzugsweise 1, 4-Diaza-bicyclo- (2,2,2)-octan und Alkanolaminverbindungen, wie Triethanolamin, Triisopropanolamin, N-Methyl-und N-Ethyl-diethanolamin und Dimethyl-ethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
e) Der Reaktionsmischung zur Herstellung der PU-Hartschaumstoffe können gegebenenfalls auch noch Hilfsmittel und/oder Zusatzstoffe (e) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatisch und bakteriostatisch wirkende Substanzen.
   Als oberflächenaktive Substanzen kommen z.B. Verbindungen in Betracht, welche zur Unterstützung der Homogenisierung der Ausgansstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinsulfid sowie Glaspartikel. Als organische Füllstoffe kommen beispielsweise in Betracht: Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) und (b), einverleibt.
   Geeignete Flammschutzmittel sind beispielsweise Trikresylphosphat, Tris-(2-chlorethyl)phosphat, Tris-(2-chlorpropyl)phosphat, Tris (1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfsund Zusatzstoffe sind der Fachliteratur, beispielsweise der Monographie von J. H. Saunders und K. C. Frisch "High Polymers" Band XVI, Polyurethanes, Teil 1 und 2, Verlag Interscience publishers 1962 bzw. 1964, oder dem Kunststoff-Handbuch-Polyurethane, Band VII, Carl-Hanser-Verlag, München, Wien, 1., 2. und 3. Auflage, 1966, 1983 und 1993 zu entnehmen.

Als Zusatz zur Reduzierung der Wärmeleitfähigkeit findet erfindungsgemäß Graphit Verwendung. Graphit kann in einer Menge von bis zu 20 Gew.-%, vorzugsweise 1 bis 10 Gew.-%, bezogen auf den Schaum, zugegeben werden. Besonders geeignet sind feingemahlene Graphittypen, deren Korngrößenverteilung zu mindestens 50 % unter 20 µm, vorzugsweise unter 10 µm liegt.

Es ist vorteilhaft, den Graphit entweder in der Aufbaukomponente a und/oder in der Aufbaukomponente b unter Rühren zu dispergieren, bevor man durch Vermischen der Komponenten den Schaum herstellt.

Zur Herstellung der PU-Hartschaumstoffe werden die organischen, gegebenenfalls modifizierten Polyisocyanate (a), die höhermolekularen Verbindungen mit mindestens zwei reaktiven Wasserstoffatomen und gegebenenfalls Kettenverlängerungsmittel und/oder Vernetzungsmittel (b) in solchen Mengen zur Umsetzung gebracht, daß das Äquivalenz-Verhältnis von NCO-Gruppen der Polyisocyanate (a) zur Summe der reaktiven Wasserstoffatome der Komponente (b) 0,85 bis 1,25:1, vorzugsweise 0,95 bis 1,15:1 und insbesondere ungefähr 1,0 bis 1,10:1 beträgt. Sofern die Urethangruppen enthaltende Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate (a) zur Summe der reaktiven Wasserstoffatome der Komponente (b) von 1,5 bis 10:1, vorzugsweise 1,5 bis 6:1 angewandt.

Die PU-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (b), (c), (d) und gegebenenfalls (e) in der Polyol-Komponente (A-Komponente) zu vereinigen und als Komponente (B) die organischen Polyisocyanaten und gegebenenfalls Treibmittel (c) zu verwenden.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU-Hartschaumstoff aushärten.

Die nach dem erfindungsgemäßen Verfahren hergestellten PU-Hartschaumstoffe besitzen vorzugsweise Dichten von 20 bis 50 g/l.

Die PU-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

### Beispiele

In allen Beispielen wurden Schäume in einer Holzform mit den Abmessungen 20x20x20 cm hergestellt. Zur Messung der Wärmeleitfähigkeit wurden Proben der Abmessungen 20x20x5 cm aus dem Schaumblock gesägt und in einem üblichen Laborgerät gemessen (Typ: Lambda-Control der Firma Hesto/6070 Langen). Da sich in der Praxis durch Ausdiffundieren von CO₂ und Eindiffundieren von Luft die Gasphasenzusammensetzung der Schäume und dadurch die Wärmeleitfähigkeit beim Lagern ändert, wurden die Proben vor der Messung 7 Tage bei 70°C getempert. In dieser Zeit ist erfahrungsgemäß der CO₂/Luft-Austausch abgeschlossen und man erhält konstante Wärmeleitfähigkeitswerte. Messungen wurden sowohl parallel als auch senkrecht zur Schäumrichtung durchgeführt, da freigeschäumte PU-Schäume normalerweise Anisotropie aufweisen und die Leitfähigkeiten in beiden Richtungen unterschiedlich sind.

Es wurden folgende 5 Graphittypen verwendet (Hersteller: Graphitwerk Kropfmühl AG).

| Typ | Firmenbezeichnung | % C (Minimum) | Korngrößenverteilung (50 %-Wert) |
|---|---|---|---|
| A | AF | 96 - 97 | 8,5 - 11,0 µm |
| B | AFspez. | 99,5 | 6,0 - 8,5 |
| C | UF 4 | 96 - 97 | 5,5 - 7,0 |
| D | UF 4 | 99,5 | 5,5 - 7,0 |
| E | UF 2 | 96 - 97 | 4,0 - 5,5 |

Zur Herstellung der Schäume wurde eine Polyolvormischung folgender Zusammensetzung hergestellt.
- 78 Gew.Teile: eines Polyetherpolyols der Hydroxylzahl 400 mg KOH/g, hergestellt durch anionische Polyaddition von 1,2-Propylenoxid an Saccharose.
- 15 Gew.Teile: eines Polyetherpolyols der Hydroxylzahl 105 mg KOH/g, hergestellt durch anionische Polyaddition von 1,2-Propylenoxid an Dipropylenglykol.
- 2,5 Gew.Teile: eines Schaumstabilisators auf Silikonbasis (Polyurax® SR 321 der Firma UCC)
- 2,0 Gew.Teile: N,N-Dimethyl-cyclohexylamin

In die Polyolvormischung wurde das jeweilige Treibmittel gegeben und anschließend Graphit eingerührt. Die erhaltenen Dispersionen wurden mit Lupranat® M20 (Mischung aus Diphenylmethandiisocyanat und Polyphenyl-polymethylenpolyisocyanat, NCO-Gehalt 31 Gew.-%) vermischt und aufschäumen lassen. Die Zusammensetzung der Reaktionsmischungen der einzelnen Beispiele, die gemessenen Wärmeleitfähigkeitswerte nach erfolgtem CO2/Luft-Austausch, sowie die Reduktion der Werte für die Wärmeleitfähigkeit durch Graphitzusatz zeigt die Tabelle .

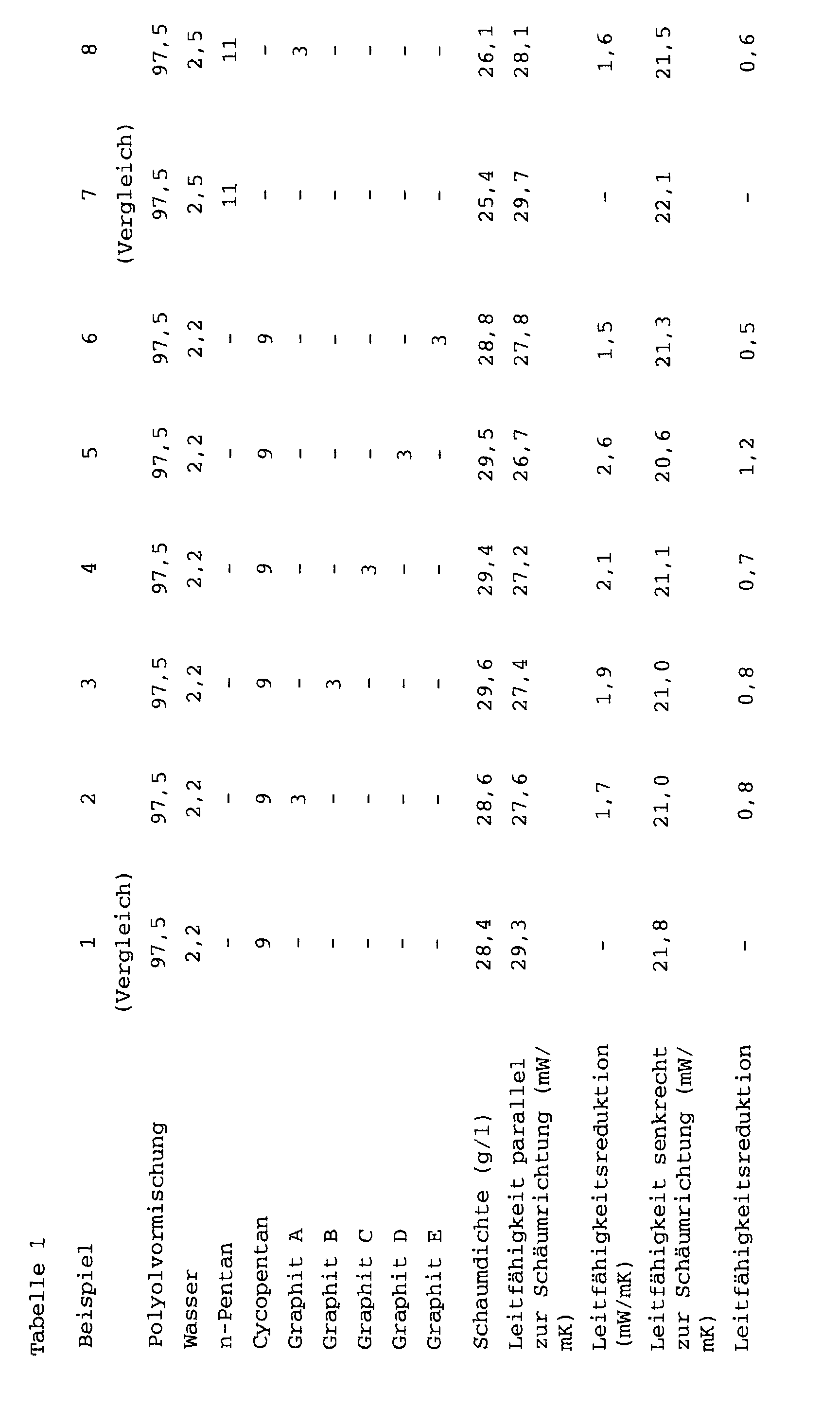

## Patentansprüche

1. Verfahren zur Herstellung von Polyurethanhartschaumstoffen mit geringer Wärmeleitfähigkeit durch Umsetzung von
a) organischen und/oder modifizierten organischen Polyisocyanaten mit
b) mindestens einer Verbindung mit mindestens 2 reaktiven Wasserstoffatomen in Gegenwart von
c) Treibmitteln,
d) Katalysatoren und gegebenenfalls
e) Hilfsmitteln und/oder Zusatzstoffen,
dadurch gekennzeichnet, daß man der Komponente a) und/oder b) Graphit, ausgenommen Blähgraphit, zusetzt.

2. Verfahren nach Anspruch 1, dadurch gekennzeichnet, daß der Graphitgehalt des Schaums bis 20 Gew.-% beträgt.

3. Verfahren nach Anspruch 1, dadurch gekennzeichnet, daß der Graphitgehalt des Schaums 1 bis 10 Gew.-% beträgt.

4. Verfahren nach Anspruch 1 dadurch gekennzeichnet, daß die Korngröße des Graphits zu mindestens 50 % unter 20 µm liegt.

5. Polyurethanhartschaumstoff, herstellbar nach einem der Ansprüche 1 bis 4.

6. Verwendung von PU-Hartschaumstoffen nach Anspruch 5 als Zwischenschicht für Verbundelemente und zum Ausschäumen von Hohlräumen in Kühlmöbelgehäusen oder Heizungselementen.

## Claims

1. A process for producing rigid polyurethane foams having a low thermal conductivity by reacting
a) organic and/or modified organic polyisocyanates with
b) at least one compound containing at least 2 reactive hydrogen atoms in the presence of
c) blowing agents,
d) catalysts and, if desired,
e) auxiliaries and/or additives,
wherein graphite, with the exception of expanded graphite, is added to the component a) and/or b).

2. A process as claimed in claim 1, wherein the graphite content of the foam is up to 20% by weight.

3. A process as claimed in claim 1, wherein the graphite content of the foam is from 1 to 10% by weight.

4. A process as claimed in claim 1, wherein at least 50% of the graphite has a particle size of less than 20 µm.

5. A rigid polyurethane foam which can be produced as claimed in any of claims 1 to 4.

6. The use of rigid PU foams as claimed in claim 5 as intermediate layer for composite elements and for filling hollow spaces in refrigeration appliance housings or heating elements with foam.

## Revendications

1. Procédé de préparation de mousses de polyuréthane rigides avec une faible conductivité thermique par réaction
a) de polyisocyanates organiques et/ou organiques modifiés avec
b) au moins un composé ayant au moins deux atomes d'hydrogène réactionnels en présence
c) d'agents d'expansion,
d) de catalyseurs et éventuellement
e) d'adjuvants et/ou d'additifs,
caractérisé en ce qu'on ajoute aux composants a) et/ou b) du graphite, à l'exclusion du graphite expansé.

2. Procédé selon la revendication 1, caractérisé en ce que la teneur en graphite de la mousse représente jusqu'à 20 % en poids.

3. Procédé selon la revendication 1, caractérisé en ce que la teneur en graphite de la mousse représente de 1 à 10 % en poids.

4. Procédé selon la revendication 1, caractérisé en ce que la granulométrie du graphite est à au moins 50 % inférieure à 20 µm.

5. Mousse de polyuréthane rigide pouvant être préparée suivant l'une des revendications 1 à 4.

6. Utilisation de mousses de PU rigides selon la revendication 5 à titre de couche intermédiaire pour des éléments composites et pour le remplissage par de la mousse de cavités dans les boîtiers d'appareils frigorifiques ou les éléments de chauffage.
